# EUROPÄISCHE PATENTSCHRIFT

(11) **EP 1 496 034 B1**
(45) Veröffentlichungstag und Bekanntmachung des Hinweises auf die Patenterteilung: **18.11.2009**
(21) Anmeldenummer: 04014812.4
(22) Anmeldetag: 24.06.2004
(51) Int. Cl.: C04B 41/87, C04B 41/89, C04B 41/50, C04B 41/52, F28F 21/04

(54) **Hochtemperaturbeständiges Bauteil und Verfahren zu dessen Herstellung**
High temperature resistant component and method of manufacturing
Composant thermostructural et son procédé de fabrication

(30) Priorität: 26.06.2003 DE 10329620
(43) Veröffentlichungstag der Anmeldung: 12.01.2005
(73) Patentinhaber: Deutsches Zentrum für Luft- und Raumfahrt e.V., 51147 Köln (DE)
(72) Erfinder: Schulte-Fischedick, Jan, 71364 Winnenden (DE); Schmidt, Jens, Dr., 70736 Fellbach (DE); Tamme, Rainer, Dr., 73760 Ostfildern (DE); Kröner, Ulrike, 71664 Vaihingen-Riet (DE)
(74) Vertreter: Hoeger, Stellrecht & Partner Patentanwälte

(56) Entgegenhaltungen:
- US-A1- 2003 138 641
- FERRARIS M ET AL: "Cordierite-mullite coating for SiCf/SiC composites" JOURNAL OF THE EUROPEAN CERAMIC SOCIETY, ELSEVIER SCIENCE PUBLISHERS, BARKING, ESSEX, GB, Bd. 22, Nr. 13, Dezember 2002 (2002-12), Seiten 2343-2347, XP004372593 ISSN: 0955-2219
- CHEMICAL ABSTRACTS, Bd. 100, Nr. 8, 20. Februar 1984 (1984-02-20), Columbus, Ohio, US; abstract no.: 55905n, XP000190967 & JP 58 167482 A (SHOWA DENKO KK) 3. Oktober 1983 (1983-10-03)
- P F PETERSON ET AL: "Advanced CSiC composites for IHX and S-I heat exchangers for the NGNP" INTERNETARTIKEL, 2. Oktober 2003 (2003-10-02), XP002321772 Gefunden im Internet: URL:http://nstg.nevada.edu/heatpresentatio ns/Microsoft%20PowerPoint%20-%20Peterson.p df> [gefunden am 2005-03-17]

## Beschreibung

Die Erfindung betrifft ein hochtemperaturbeständiges Bauteil, in einem Temperaturbereich zwischen 800°C und 1400°C, aus einem kohlenstoffhaltigen Grundkörper und/oder einem Grundkörper aus einem keramischen Material mit einer Korrosionsschutzschicht aus einem Oxidmaterial.

Bauteile auf Graphit-Basis oder C/C-Basis (kohlenstoffaserverstärktes Kohlenstoff) oder SiC-Basis als nichtoxides monolithisches Keramikmaterial sollen beispielsweise für Hochtemperaturwärmeübertrager eingesetzt werden. Sie sollen Temperaturen von 800°C bis 1400°C bei hoher Oxidationsstabilität aushalten können.

Aus dem Artikel "Oxidation protection for carbon fibre composites" von M.E. Westwood et al., Journal of Materials Science 31 (1996) 1389-1397 sind Oxidationsschutzsysteme für kohlenstoffverstärkte Keramiken bekannt.

Ein Oxidationsschutzsystem ist beispielsweise unter der Bezeichnung BORASiC der Schunk Kohlenstoff-Technik GmbH, Heuchelheim bekannt (BORASiC ist eine eingetragene deutsche Marke).

Aus dem Artikel "Cordierite-mullite coating for SiCf/SiC composites" von M. Ferraris et al., Journal of the European Ceramic Society 22 (2002) 2343 bis 2347, ist es bekannt, eine kristalline Cordierit-Mullit-Beschichtung zur Erhöhung der Korrosionsbeständigkeit und Oxidationsbeständigkeit vorzusehen.

Der Erfindung liegt die Aufgabe zugrunde, ein hochtemperaturbeständiges Bauteil der eingangs genannten Art bereitzustellen, welches einen großen Einsatzbereich aufweist.

Diese Aufgabe wird bei dem eingangs genannten Bauteil erfindungsgemäß dadurch gelöst, dass der thermische Ausdehnungskoeffizient des Oxidmaterials höchstens 70 % des thermischen Ausdehnungskoeffizienten des Materials, welches unterhalb der Korrosionsschutzschicht angeordnet ist, beträgt, wobei die Korrosionsschutzschicht eine Cordierit-Schicht ist und das Material unterhalb der Cordierit-Schicht SiC ist.

Erfindungsgemäß wird ein Schutzüberzug bereitgestellt, welcher dazu führt, dass bei der Abkühlung bei der Herstellung sich in der Korrosionsschutzschicht Druckeigenspannungen aufbauen, die die Festigkeit erhöhen. Dadurch wiederum ist die Rissbildung reduzierbar, was eben zu erhöhter Oxidationsbeständigkeit und Korrosionsbeständigkeit führt.

Die Korrosionsschutzschicht ist eine Cordierit-Schicht. Eine Cordierit-Schicht (insbesondere als reine Schicht) wirkt als Oxidationsschutzschicht und verbessert damit den Oxidationsschutz für den Grundkörper. Es ist grundsätzlich möglich, auf eine zusätzliche Oxidationsschutzschicht zu verzichten, wenn eine Cordierit-Schicht vorhanden ist.

Eine Cordierit-Schicht wirkt vor allem als Korrosionsschutzschicht, die der Heißkorrosion (wie beispielsweise Heißgaskorrosion) entgegenwirkt. Es hat sich gezeigt, dass Cordierit eine sehr gute Stabilität gegenüber korrosiven Atmosphären aufweist, wie beispielsweise Rauchgasatmosphären.

Es kann vorgesehen sein, dass unterhalb der Korrosionsschutzschicht zum Grundkörper hin mindestens eine Oxidationsschutzschicht angeordnet. Die Oxidationsschutzschicht hat vorzugsweise Selbstheilungsfunktion, bei welcher Schichtmaterial bei Kontakt mit Sauerstoff zu einem Oxid unter Volumenzunahme reagiert. Wenn dann Sauerstoff in Risse in der Schicht eintritt, dann führt die Oxidbildung unter Volumenzunahme zu einem Versiegeln der Risse und der Eintritt von weiterem Sauerstoff wird verhindert.

Es kann dabei eine sekundäre Oxidationsschutzschicht vorgesehen sein, welche unterhalb einer primären Oxidationsschutzschicht angeordnet ist. Insbesondere können primäre und sekundäre Oxidationsschutzschicht unterschiedliche relevante Temperaturbereiche aufweisen: Die Selbstheilungsfunktion tritt bei den unterschiedlichen Schichten bei unterschiedlichen Temperaturen ein. Dadurch wird für das Gesamtbauteil eine erhöhte Schutzwirkung erzielt.

Es kann dabei vorgesehen sein, dass die primäre Oxidationsschutzschicht Si enthält und die sekundäre Oxidationsschutzschicht Bor enthält, welches bei Kontakt mit Sauerstoff zu einem Oxid mit Volumenzunahme reagiert. Bei dem Vorsehen eines Borids lässt sich auch bei niedrigeren Temperaturen, wie beispielsweise 870°C, eine Selbstheilungsfunktion erzielen.

Insbesondere ist zwischen Grundkörper und Bauteiloberfläche eine Cordierit-Schicht vorgesehen, welche für einen Korrosionsschutz sorgt. Eine Cordierit-Schicht wirkt zusätzlich als Oxidationsschutzschicht und verbessert damit den Oxidationsschutz für den Grundkörper. Eine Cordierit-Schicht wirkt besonders als Korrosionsschutzschicht, die der Heißkorrosion entgegenwirkt. Es hat sich gezeigt, dass Cordierit eine sehr gute Stabilität gegenüber korrosiven Atmosphären aufweist, wie beispielsweise Rauchgasatmosphären.

BORASiC-Schichtsysteme, die einen sehr guten Oxidationsschutz bewirken, werden unter korrosiven Bedingungen angegriffen, da das enthaltene SiC und auch B₂O₃ unter korrosiven Bedingungen angegriffen werden.

Eine Cordierit-Schicht, die auf einer solchen BORASiC-Schichtsystem angeordnet wird oder direkt auf dem Grundkörper oder auf einer anderen Zwischenschicht auf dem Grundkörper angeordnet ist, verbessert den Oxidationsschutz und stellt einen Korrosionsschutz bereit.

Cordierit weist ein relativ geringes Elastizitätsmodul von E = 125 GPa und einen geringen thermischen Ausdehnungskoeffizienten von 1 - 2 · 10⁻⁶1/K auf. Diese günstigen Eigenschaften führen im Vergleich zu anderen bekannten Beschichtungsmaterialien zu geringen thermischen Spannungen.

Günstigerweise deckt die Korrosionsschutzschicht den Grundkörper zur Bauteiloberfläche ab, d. h. versiegelt diesen gewissermaßen zur Bauteiloberfläche hin. Dadurch werden der Grundkörper und eventuelle Zwischenschichten auf dem Grundkörper vor Korrosion geschützt.

Insbesondere ist die Korrosionsschutzschicht eine äußere Schicht.

Aus dem gleichen Grund ist es vorteilhaft, wenn die Oberfläche des Bauteils mit der Korrosionsschutzschicht gebildet ist.

Beispielsweise ist unterhalb einer Cordierit-Schicht zum Grundkörper hin mindestens eine Oxidationsschutzschicht vorgesehen ist, um den Oxidationsschutz zu verbessern. Der Oxidationsschutz kann dabei einschichtig aufgebaut sein oder in einem Oxidationsschutzsystem einen mehrschichtigen Aufbau aufweisen. Ein Beispiel für eine einschichtige Oxidationsschutzschicht ist eine einzelne SiC-Schicht. Ein Beispiel für eine mehrschichtige Oxidationsschutzschicht ist ein BORASiC-Schichtsystem.

Insbesondere enthält die Oxidationsschutzschicht Silizium-Verbindungen. Dadurch kann SiO₂ (Siliziumdioxid) unter Volumenzunahme gebildet werden.

Es ist dann besonders vorteilhaft, wenn mindestens eine Oxidationsschutzschicht vorgesehen ist, welche Selbstheilungsfunktion hat. Wenn Sauerstoff über Risse in die Oxidationsschutzschicht gelangt, dann kann er mit dem Material zu einer (fest haftenden) oxidischen Verbindung unter Volumenzunahme reagieren, wodurch der Riss gewissermaßen versiegelt wird.

Insbesondere bildet das Material für die Oxidationsschutzschicht bei Kontakt mit Sauerstoff ein Oxid, wobei eine Volumenzunahme eintritt. Das Oxid sollte dabei haftend sein. SiC reagiert bei Sauerstoffzufuhr zu chemisch stabilem SiO₂ bei Temperaturen ab ca. 1100°C. B₄C reagiert ab ca. 870°C zu B₂O₃. Es ist dann günstig, wenn mindestens eine SiC-Schicht vorgesehen ist und alternativ oder zusätzlich mindestens eine B₄C-Schicht vorgesehen ist. Über solche Schichten lässt sich eine Selbstheilungsfunktion erreichen.

Es ist dann besonders günstig, wenn auf dem Grundkörper ein SiC-B₄C-SiC-Schichtsystem angeordnet ist und auf diesem Schichtsystem eine Cordierit-Schicht angeordnet ist. Das oben genannte Schichtsystem ist das BORASiC-System. Es wird durch den mehrschichtigen Aufbau dieses Schichtsystems eine Selbstheilungsfunktion zur Versiegelung von Rissen in einem großen Temperaturbereich erreicht, nämlich ab ca. 870°C über B₄C und ab ca. 1100°C über SiC.

Es kann günstig sein, wenn die Cordierit-Schicht Poren aufweist. Die Porengröße ist dabei vorzugsweise kleiner als
50 µm und bevorzugt kleiner al 30 µm. Dies ist insbesondere vorteilhaft, wenn die Cordierit-Schicht auf einem BORASiC-System oder auf SiC angeordnet ist. Ein BORASiC-Cordierit-System und SiC-Cordierit-System verfügt über zwei wesentliche Rissstoppmechanismen: Ein Teil der Risse wird an der Grenzfläche abgelenkt und bildet partielle Ablösungen aus. Risse, die in die Cordierit-Schicht eindringen, werden an den Poren gestoppt. Dies ist auf eine reduzierte Kerbspannungsempfindlichkeit zurückzuführen, die sich dadurch ergibt, dass die Poren die Rissspitzen "abrunden". Es hat sich gezeigt, dass nur noch ein Teil der im BORASiC oder SiC vorhandenen Risse durch das Cordierit dringen konnte; bei Versuchen wurde die Rissdichte von 2,5 ·1/mm in BORASiC auf 0,8·1/mm in der Cordierit-Schicht herabgesetzt. Weiterhin weist Cordierit ein geringeres Elastizitätsmodul und einen geringeren thermischen Ausdehnungskoeffizienten auf als SiC. Bei der Abkühlung während der Beschichtung bauen sich dadurch in der Cordierit-Schicht Eigenspannungen auf, die die effektive Festigkeit erhöhen. Diese Rissstoppmechanismen sind für alle Mehrschichtsysteme mit Cordierit als Außenschicht wirksam.

Es kann jedoch auch vorteilhaft sein, wenn die Cordierit-Schicht im Wesentlichen porenfrei ist. Die Einstellung der Porenfreiheit erfolgt über Parameter bei der Aufbringung der Schicht, beispielsweise über Parameter eines Plasmaspritzvorgangs. Durch eine weitgehende Porenfreiheit lässt sich unter Umständen die Sauerstoffdiffusion durch die Korrosionsschutzschicht hindurch verringern und dadurch die aktive Oxidation verhindern oder zumindest verringern.

Insbesondere liegt die Dicke der Korrosionsschutzschicht mindestens bei 30 µm, wobei sie vorteilhafterweise zwischen 100 µm und 500 µm liegt.

Es kann vorgesehen sein, daß der kohlenstoffhaltige Grundkörper ein Graphit-Grundkörper ist. In diesem Falle ist dann die Korrosionsschutzschicht vorzugsweise direkt auf den Grundkörper aufgebracht.

Bei einer weiteren Ausführungsform ist der kohlenstoffhaltige Grundkörper aus einem keramischen Verbundwerkstoff hergestellt. Solche keramischen Verbundwerkstoffe auf Kohlenstoffbasis weisen eine hohe Temperaturstabilität auf, die unter inerter Atmosphäre bis ca. 2200°C reichen kann.

Insbesondere ist der Grundkörper ein C/C-Grundkörper, d. h. ein kohlefaserverstärkter Kohlenstoffmatrixgrundkörper.

Es ist auch möglich, daß der Grundkörper ein C/C-SiC-Grundkörper ist, in welchem metallisches Silizium eingelagert ist. Bei dem sogenannten LSI-Verfahren (liquid silicon infiltration) wird ein kohlenstoffaserverstärkter Kunststoff durch Pyrolyse in einen kohlenstoffaserverstärkten Kohlenstoff-Vorkörper umgewandelt. Die durch die Fasern behinderte Schrumpfung der sich umwandelnden Kohlenstoffmatrix führt zur Ausbildung eines regelmäßigen Rißmusters. Dieses wird in einem nachfolgenden Schritt mit flüssigem Silizium infiltriert, das mit dem Kohlenstoff zu SiC reagiert. Die Matrix dieses Werkstoffes besteht aus Kohlenstoff, SiC und nicht reagiertem, metallischen Silizium.

Es kann insbesondere vorgesehen sein, daß der Grundkörper Refraktärmetalle wie Chrom und/oder Titan enthält. Bei einem alternativen Verfahren wird der poröse C/C-Vorkörper nicht mit reinem Silizium sondern mit einer binären Legierung auf Siliziumbasis infiltriert, wobei die Legierungselemente eben Refraktärmetalle wie Chrom oder Titan sind. Dieses Verfahren führt zu einer Erhöhung des Dampfpunktes dieser Werkstoffe, die die Abdampfrate für Silizium aus dem Vorkörper reduziert. Das Abdampfen von Silizium führt zu Hohlräumen, die als Initiierungsstellen für Risse wirken. Durch das beschriebene Verfahren läßt sich die Rißdichte reduzieren und damit die Oxidationsbeständigkeit und die Korrosionsbeständigkeit des Bauteils verbessern.

Der keramische Grundkörper kann auch aus einem monolithischen Keramikmaterial wie SiC oder Si₃Ni₄ hergestellt sein. Bei einem monolithischen Keramikmaterial kann unter Umständen auf Oxidationsschutzschichten zwischen der Korrosionsschutzschicht und dem Grundkörper verzichtet werden.

Es kann vorteilhaft sein, wenn ein Substrat für die Korrosionsschutzschicht einen Gradientenaufbau zur Anpassung der thermischen Ausdehnungskoeffizienten aufweist. Das Substrat für die Korrosionsschutzschicht ist dabei der Grundkörper oder der Grundkörper mit darauf angeordneter Zwischenschicht oder Zwischenschichten. Durch den Gradientenaufbau läßt sich eine allmähliche Anpassung der thermischen Ausdehnungskoeffizienten erreichen, um so insbesondere sicherzustellen, daß der thermische Ausdehnungskoeffizient des Oxidmaterials der Korrosionsschutzschicht niedriger ist als der thermische Ausdehnungskoeffizienten des Materials, welches unterhalb der Korrosionsschutzschicht angeordnet ist.

Wenn die Korrosionsschutzschicht direkt auf dem Grundkörper angeordnet ist, dann ist es vorteilhaft, wenn der Grundkörper einen entsprechenden Gradientenaufbau aufweist.

Insbesondere im Zusammenhang mit einem Grundkörper aus einem monolithischen Keramikmaterial kann es vorgesehen sein, dass die Korrosionsschutzschicht ohne Zwischenschicht auf dem Grundkörper angeordnet ist, d. h. direkt auf diesem angeordnet ist. Dadurch ergibt sich eine vereinfachte und kostengünstigere Herstellung des entsprechenden Bauteils.

Der Grundkörper ist dann aus SiC hergestellt.

Insbesondere ist es möglich, den Grundkörper aus biomorphem SiC herzustellen. Entsprechende Herstellungsverfahren sind in der nicht vorveröffentlichten deutschen Anmeldung Nr. 103 29 822.3 vom 30. Juni 2003 des gleichen Anmelders beschrieben. Auf diese Anmeldung wird ausdrücklich Bezug genommen.

Die Erfindung betrifft ferner ein Verfahren zur Herstellung eines hochtemperaturbeständigen Bauteils.

Es liegt dabei die Aufgabe zugrunde, ein Verfahren bereitzustellen, mit dem sich hochtemperaturbeständige Bauteile mit optimierten Eigenschaften realisieren lassen.

Diese Aufgabe wird erfindungsgemäß dadurch gelöst, dass auf einen kohlenstoffhaltigen Grundkörper oder einen Grundkörper aus einem monolithischen Keramikmaterial als äußere Schicht eine Cordierit-Schicht auf SiC aufgebracht wird.

Die Cordierit-Schicht kann direkt oder indirekt (mit einer oder mehreren Zwischenschichten) auf den Grundkörper aufgebracht werden.

Das erfindungsgemäße Verfahren wurde bereits im Zusammenhang mit dem erfindungsgemäßen Bauteil erläutert.

Weitere vorteilhafte Ausgestaltungen wurden ebenfalls bereits im Zusammenhang mit dem erfindungsgemäßen Bauteil erläutert.

Insbesondere kann die Cordierit-Schicht so aufgebracht werden, dass sie Poren aufweist. Diese Poren können dazu dienen, die Rissausbreitung zu reduzieren.

Es hat sich gezeigt, dass, wenn die Cordierit-Schicht mittels Plasmaspritzen aufgebracht wird, sich Poren ausbilden, die geeignet sind, die Rissausbreitung zu stoppen. Die Poren weisen dabei die geeignete Porengröße auf.

Es kann aber auch günstig sein, diese porenfrei aufzubringen. Bei porenfreier Aufbringung lässt sich unter Umständen die aktive Oxidation eines Substrats unterhalb der Korrosionsschutzschicht verringern.

Es kann vorgesehen sein, dass die Cordierit-Schicht auf eine SiC-Schicht aufgebracht wird, wobei die SiC-Schicht eine einzelne Schicht sein kann, die insbesondere auf dem Grundkörper sitzt, oder Teil eines Mehrschichtsystems wie eines BORASiC-Systems sein kann. Die SiC-Schicht kann dabei mittels CVD oder Plasmaspritzen aufgebracht werden.

Es ist grundsätzlich vorgesehen, dass die Cordierit-Schicht als reine Schicht aufgebracht wird.

Beispielsweise wird die Cordierit-Schicht auf ein SiC-B₄C-SiC-System aufgebracht. Neben den guten Korrosionseigenschaften der Cordierit-Schicht lassen sich auch über das BORASiC-Cordierit-System bestehende Risse versiegeln, da das System BORASiC-Cordierit die oben beschriebenen Selbstheilungsmechanismen aufweist. Weiterhin ist der thermische Ausdehnungskoeffizient von Cordierit kleiner als der der angrenzenden SiC-Schicht, was bei der Abkühlung zu Druckeigenspannungen führt, die die Festigkeit der Cordierit-Schicht erhöhen. Weiterhin weist Cordierit insbesondere gegenüber dem BORASiC-System einen geringeren Elastizitätsmodul auf, wodurch die thermischen Spannungen beim Abkühlen verringert sind.

Bei dem Grundkörper handelt es sich bei einer Ausführungsform um einen C/C-SiC-Grundkörper. Dieser kann grundsätzlich durch das oben beschriebene LSI-Verfahren oder durch ein modifiziertes LSI-Verfahren hergestellt werden.

Besonders vorteilhaft ist es, wenn bei der Herstellung des Grundkörpers ein poröser C/C-Vorkörper mit einer binären Legierung auf Si-Basis infiltriert wird. Die Legierung umfasst dabei vorzugsweise ein oder mehrere Refraktärmetalle wie Titan oder Chrom. Die Refraktärmetalle bilden eine Silizidphase aus, deren Schmelzpunkt über dem des reinen Siliziums liegt. Silizium reagiert zu SiC und wird dem Phasengleichgewicht entzogen. Der C/C-SiC-Vorkörper enthält statt freiem Silizium eine intermetallische Verbindung in der metallischen Restphase, deren Schmelzpunkt und damit auch Dampfpunkt deutlich über dem des reinen Siliziums liegt. Dies führt zu einer verringerten Abdampfrate der metallischen Restphase. Das Auslösen von metallischem Silizium führt zu Rissen, die in der Regel durch eine Schutzschicht nicht gestoppt werden können, da sie breiter sind als normale Risse. Durch das erfindungsgemäße Vorgehen wird eben das Auslösen des metallischen Siliziums reduziert oder sogar verhindert, so dass in einer Schicht auf dem Grundkörper die Rissdichte reduziert wird.

Es ist auch möglich, die Cordierit-Schicht direkt auf einen keramischen Grundkörper aufzubringen. Insbesondere handelt es sich bei dem keramischen Grundkörper um einen monolithischen Keramikkörper. Dieser ist aus SiC hergestellt. Es ergibt sich
dadurch eine vereinfachte Herstellung mit einer Herabsetzung der Herstellungskosten.

Weiterhin ist es günstig, wenn der Grundkörper so hergestellt wird, daß die mittlere Rißbreite von Rissen an der Oberfläche zu der aufzubringenden Schutzschicht hin minimiert ist. Es ist bekannt, daß bei der Silicierung eines C/C-Grundkörpers SiC-Stege von Rißufern ausgehend entstehen. Nachdem sich eine erste SiC-Lage gebildet hat, wird die Reaktionsrate von der Diffusion des Siliziums an die Grenzfläche Kohlenstoff zu SiC gesteuert. Die Reaktionsrate ist von der Dicke der bereits gebildeten SiC-Lage und der Zeit abhängig, jedoch nicht von der Breite des Risses, der infiltriert wird. Wenn die pyrolysebedingten Risse im C/C-Vorkörper an der späteren Grenzfläche zur Schutzschicht (wie beispielsweise einer SiC-Lage) möglichst klein gehalten werden, dann wird dadurch auch das Problem der Siliziumabdampfung während der Beschichtung reduziert oder sogar vermieden. Es kann dort der Si-Anteil zugunsten des SiC-Anteils verringert werden.

Günstig ist es, wenn der Grundkörper mindestens in seine äußeren Gewebelagen mit kleiner Laminatdicke hergestellt wird. Insbesondere sollte die Laminatdicke kleiner als 1 k sein (1 k entspricht 1000 Fasern pro Faserbündel). Dadurch läßt sich der mittlere Rißabstand und die mittlere Rißbreite reduzieren (diese verringert sich mit abnehmender Laminatdicke). Eine verringerte Laminatdicke läßt sich erreichen, wenn feine Gewebelagen verwendet werden.

Weiterhin ist es günstig, wenn das Bauteil thermisch behandelt wird. Dieser thermische Nachbehandlungsschritt findet insbesondere unter einer inerten Atmosphäre statt. Eine thermische Nachbehandlung führt zu einer günstigeren Verteilung der Porengröße in der Cordierit-Schicht. Insbesondere wird die Dichte großer Poren zu Ungunsten kleiner Poren erhöht. Dieser Effekt ist vorteilhaft, um die Empfindlichkeit der Cordierit-Schicht gegenüber weiteren in der darunter liegenden Schicht oder im Grundkörper entstehenden Rissen zu erniedrigen.

Ferner günstig ist es, wenn bei der Bauteilherstellung scharfe Ecken und Kanten vermieden werden (dazu zählen auch 90 °-Winkel, die vermieden werden sollten). Diese Ecken führen zu extremen Spannungsspitzen in der Oxidationsschutzschicht bzw. Korrosionsschutzschicht. An entsprechenden Ecken oder Kanten sollten Fasen oder Abrundungen vorgesehen werden.

Erfindungsgemäß wird eine Cordierit-Schicht auf SiC als Korrosionsschutz für einen Grundkörper verwendet. Die Cordierit-Schicht wird direkt auf den Grundkörper aufgebracht oder auf eine Schicht auf dem Grundkörper. Durch die Cordierit-Beschichtung wird eine Hochtemperaturbeständigkeit auch bei der Anwesenheit von korrosiven Gasen erreicht.

Der Grundkörper kann aus einem monolithischen Keramikmaterial und insbesondere nichtoxidischen Keramikmaterial wie SiC oder Si₃N₄ hergestellt sein.

Der Grundkörper kann auch aus einem Faserverbundwerkstoff und insbesondere aus einem Faserverbundkeramikmaterial hergestellt sein. Dieses Faserverbundkeramikmaterial kann kohlenstoffbasiert sein.

Es ist auch möglich, daß der Grundkörper aus Graphit hergestellt ist.

Die nachfolgende Beschreibung bevorzugter Ausführungsformen dient im Zusammenhang mit der Zeichnung der näheren Erläuterung der Erfindung. Es zeigen:
- Figur 1: eine Querschliffotografie eines Ausführungsbeispiels eines erfindungsgemäßen Bauteils;
- Figur 2: das Oxidationsverhalten als prozentuale Massenänderung bei isothermischer Auslagerung bei 1300°C bzw. thermischer Zyklierung zwischen 1000°C und 1300°C bei unterschiedlich beschichteten Bauteilen mit einem C/C-SiC-Grundkörper;
- Figur 3: ein Anwendungsbeispiel für ein erfindungsgemäßes Bauteil;
- Figur 4: eine Querschliffotografie eines weiteren Ausführungsbeispiels eines erfindungsgemäßen Bauteils und
- Figur 5: ein weiteres Ausführungsbeispiel eines erfindungsgemäßen Bauteils.

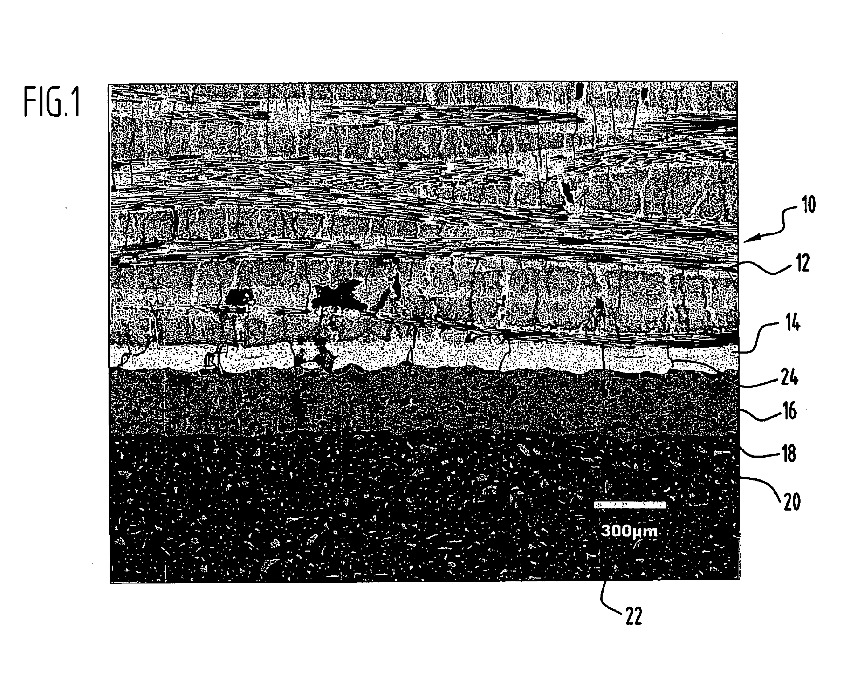

Figur 1 zeigt ein Ausführungsbeispiel eines erfindungsgemäßen Bauteils in einem Querschliff. Die Größenskala ist angegeben. Ein kohlenstoffhaltiger Grundkörper 10 besteht aus C/C-SiC, d. h. aus einem kohlenstoffbasierten keramischen Verbundwerkstoff mit einem Keramikmaterial, welches mit Fasern auf der Basis von Kohlenstoff verstärkt ist. In der Fotografie gemäß Figur 1 sind Fasern 12 erkennbar. Auf dem Grundkörper 10 ist nach außen hin ein BORASiC-Schichtsystem 14 angeordnet, welche als Oxidationsschutzschicht wirkt. Auf dem BORASiC-Schichtsystem 14 ist erfindungsgemäß eine Cordierit-Schicht 16 angeordnet. Die Schichtdicke beträgt bei dem in Figur 1 gezeigten Beispiel ca. 220 µm.

BORASiC ist der Name eines Beschichtungssystems der Schunk Kohlenstoff-Technik GmbH, Heuchelheim. BORASiC ist eine eingetragene deutsche Marke (Registrierungsnummer 300 356 38). Eine BORASiC-Schicht setzt sich zusammen aus einer SiC-Schicht, einer B₄C-Schicht und einer abdeckenden SiC-Schicht. Diese Schichtenfolge ist in der Fotografie gemäß Figur 1 nicht erkennbar.

Cordierit, welches auch als Dichroit bezeichnet wird und hat als Summenformel Mg₂Al₃[AlSi₅ O₁₈] bzw. 2MgO · 2Al₂O₃ · 5SiO₂. Cordierit weist ein geringes Elastizitätsmodul von E = 125 GPa auf und einen geringen thermischen Ausdehnungskoeffizienten von 1 - 2 · 10⁻⁶ 1/K. Dieser kleine Elastizitätsmodul und der geringe thermische Ausdehnungskoeffizient führt im Vergleich zu anderen Beschichtungsmaterialien zu geringen thermischen Spannungen.

Der thermische Ausdehnungskoeffizient von Cordierit ist kleiner als der des Materials des BORASiC-Schichtsystems 14, bei dem der thermische Ausdehnungskoeffizient bei 4,5 · 10⁻⁶ 1/K liegt. Während der Abkühlungsphase bei der Herstellung des Bauteils bauen sich dadurch in der Cordierit-Schicht 16 Druckspannungen auf, die die Festigkeit dieser Schicht 16 erhöhen.

Die Cordierit-Schicht 16 weist herstellungsbedingt, wie unten noch näher erläutert wird, Poren 18 auf. Diese haben eine Größe, die unterhalb 50 µm liegt.

Das System aus BORASiC-Schicht 14 und Cordierit-Schicht 16 verfügt über Rißstoppmechanismen: Ein Teil der Risse wird an der Grenzfläche zwischen der SiC-Schicht der BORASiC-Schicht 14 abgelenkt und bildet partielle Ablösungen aus.

Risse, die in die Cordierit-Schicht 16 eindringen, werden an den Poren 18 gestoppt. Dies ist auf eine reduzierte Körperspannungsempfindlichkeit zurückzuführen, die dadurch verursacht wird, daß Poren 18 eine Rißspitze "abrunden". Es ist zu erwarten, daß dieser "Abrundungseffekt" von der Dichte großer Poren 18 abhängig ist. Es hat sich gezeigt, daß bei thermischer Auslagerung die Dichte großer Poren steigt, während die Dichte kleiner Poren abnimmt.

Die obere SiC-Schicht des BORASiC-Systems 14 weist zu der Cordierit-Schicht 16 hin.

Die Cordierit-Schicht 16 bildet eine äußere Oberfläche 20 des Bauteils und deckt damit das Bauteil nach außen ab, d. h. kapselt das Bauteil nach außen hin.

In Figur 1 ist noch ein Präparationsmaterial 22 für den Querschliff erkennbar, welches nicht Bestandteil des Bauteils ist.

Die äußere Cordierit-Schicht 16 bildet eine Korrosionsschutzschicht, die es ermöglicht, daß das Bauteil bei hohen Temperaturen, beispielsweise bei Temperaturen zwischen 1000°C und 1400°C, unter oxidativen und korrosiven Atmosphären eingesetzt werden kann. Durch die Cordierit-Schicht 16 wird verhindert, daß aggressiv wirkende Gase in das Bauteil eindringen und zu dem kohlenstoffhaltigen Grundkörper 10 hin durchdringen. Dabei wird auch verhindert, daß korrosive Gase zum BORASiC-Schichtsystem 14 gelangen und dies beschädigen. Die Cordierit-Schicht 16 stellt auch einen gewissen Oxidationsschutz dar, wobei das BORASiC-Schichtsystem 14 das eigentliche Oxidationsschutzsystem darstellt.

Das BORASiC-Schichtsystem 14, welches eine Dreifachschicht aus SiC, B₄C und SiC ist, stellt ein Oxidationsschutzschichtsystem dar, welches Selbstheilungsfunktion hat: Aufgrund der unterschiedlichen thermischen Ausdehnungskoeffizienten zwischen dem Schichtsystem 14 und dem Grundkörper 10 entstehen Risse in dem Schichtsystem 14. Diese sind in der Fotografie 1 erkennbar. Ein Riß ist dort mit dem Bezugszeichen 24 bezeichnet. Durch einen solchen Riß kann, wenn Sauerstoff durch die Cordierit-Schicht 16 zu dem Schichtsystem 14 gelangt, zum Grundkörper 10 hin gelangen. Jedoch führt der Selbstheilungsmechanismus des Schichtsystems 14 dazu, daß Sauerstoff, der durch solche Risse 24 eindringt, mit den Rißflanken unter Volumenzunahme zu einem festen Reaktionsprodukt reagiert, welches den Riß versiegelt. Solche Reaktionsmechanismen sind in dem Artikel "Oxidation protection for carbon fibre composites" von M.E. Westwood et al., Journal of Materials Science 31 (1996) 1389-1397 beschrieben, auf den ausdrücklich Bezug genommen wird. In dem Schichtsystem 14 wirkt dabei die der Cordierit-Schicht 16 zugewandte SiC-Schicht als primäre Oxidationsschutzschicht, in der ab einer Temperatur von ca. 1100°C Si zu chemisch stabilem SiO₂ reagiert. Eine B₄C-Schicht wirkt in dem System 14 als sekundäre Oxidationsschutzschicht, in der ab 870°C B zu B₂O₃ reagiert. Die Reaktionsprodukte SiO₂ und B₂O₃ unterbinden in unterschiedlichen Temperaturbereichen die Sauerstoffzufuhr zum Grundkörper 10, indem entsprechend die Risse 24 versiegelt werden.

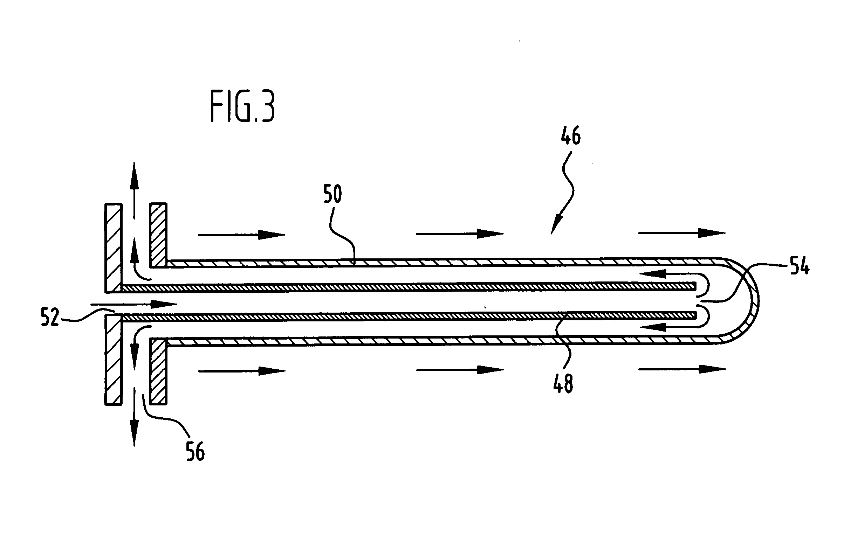

Das Bauteil gemäß Figur 1 wird erfindungsgemäß wie folgt hergestellt:
Das Bauteil, bei dem es sich beispielsweise um ein Rohr handelt, wie unten noch im Zusammenhang mit Figur 3 beschrieben wird, wird über das Legen eines trockenen C-Gewebes hergestellt. Das Gewebe wird zugeschnitten und beispielsweise auf einen starren Stahlkern aufgewickelt. Der bewickelte Kern wird in eine zweiteilige Stahlform eingebaut, die evakuiert wird und anschließend mit Harz auf Phenolbasis infiltriert wird. Während des Prozesses wird die gesamte Form auf ca. 170°C beheizt, um eine gleichmäßige Temperaturverteilung zu gewährleisten. Das Harz wird in einer Stickstoffatmosphäre druckinfiltriert (d. h. es wird eine Harzinjektion durchgeführt). Bei einem Druck von ca. 20 bar und bei einer Temperatur von ca. 200°C wird in Abhängigkeit der Wandstärke des herzustellenden Bauteils über einen Zeitraum von 10 bis 20 Stunden ausgehärtet.

Es lassen sich in Abhängigkeit vom gewählten Außendurchmesser des Stahlkerns unterschiedliche Wandstärken realisieren. Bevorzugterweise werden Faservolumengehalte zwischen 50 und 60 Volumenprozent eingestellt, um eine hohe Faser-Matrix-Bindung im Faserverbundwerkstoff-Bauteil zu erhalten. Dieses so hergestellte Zwischenprodukt wird einer zweistufigen Pyrolyse bis 1600°C unter einer Inertatmosphäre unterworfen. Die Pyrolyse resultiert in einem offenporigen Vorkörper. Dieser Kohlenstoff-Vorkörper ist mit Metallschmelzen infiltrierbar. Durch langsam gewählte Aufheizraten können hohe Schrumpfspannungen während der Pyrolyse vermieden werden.

Der Vorkörper ist ein mit Kohlenstoffasern verstärkter Kohlenstoff-Körper (d. h. ein C/C-Körper). Bei dem sogenannten LSI-Verfahren (liquid silicon infiltration) wird dieser C/C-Vorkörper, welcher ein regelmäßiges Rißmuster aufweist, mit flüssigem Silizium infiltriert, welches mit dem Kohlenstoff des Vorkörpers zu Siliziumcarbid (SiC) reagiert. Das regelmäßige Rißmuster entsteht dabei dadurch, daß die Kohlenstoffasern die Schrumpfung der Kunststoffmatrix bei der Konsolidierung behindern.

C/C-SiC ist ein kohlenstoffaserverstärkter Werkstoff, der eine Matrix aus Kohlenstoff, SiC und nicht reagiertes metallisches Silizium aufweist. Auf einem solchen Grundkörper 10 sitzt dann das BORASiC-Schichtsystem 14 als Oxidationsschutzschichtsystem.

Erfindungsgemäß kann es auch vorgesehen sein, daß der poröse C/C-Vorkörper nicht mit reinem Silizium, sondern mit einer binären Legierung oder mit binären Legierungen auf Siliziumbasis infiltriert wird. Dies dient dazu, das Herauslösen des Siliziums zu vermeiden, da ein solches Auslösen des metallischen Siliziums vor der BORASiC-Schicht 14 zu künstlichen Rissen führen kann, die auch durch die Cordierit-Schicht 16 unter Umständen nicht mehr gestoppt werden können.

Die Legierungselemente der binären Legierungen sind Refraktäranteile wie vorzugsweise Chrom und Titan. Diese Refraktärmetalle bilden eine Silizidphase aus, deren Schmelzpunkt unter dem des reinen Siliziums (welcher bei 1411°C liegt) liegt. Das Silizium reagiert aber zu SiC und wird dem Phasengleichgewicht entzogen. Dies führt dazu, daß sich in der metallischen Restphase im C/C-SiC-Vorkörper die Legierungselemente anreichern. Dies führt zu einer Erhöhung des Dampfpunktes. Dies resultiert in reduzierten Abdampfraten von metallischem Silizium. Der C/C-SiC-Grundkörper 10 kann dann mit dem Schichtsystem 14 beschichtet werden, ohne daß die metallische Si-Phase ausgelöst werden muß.

Das Schichtsystem 14 wird über eine Mehrfachbeschichtung mit Funktionentrennung hergestellt. Über CVD (chemical vapor deposition) und/oder Plasmaspritzen wird der Grundkörper 10 mit SiC beschichtet.

Als weitere Schicht wird die B₄C-Schicht aufgebracht, beispielsweise mittels CVD.

Weiterhin wird die SiC-Schicht auf die B₄C-Schicht aufgebracht, um so die Multifunktions-BORASiC-Schicht 14 zu bilden. Die Dicke des Schichtsystems 14 liegt dabei beispielhaft zwischen 100 µm bis 300 µm.

Das Schichtsystem 14 selber stellt einen guten Oxidationsschutz bereit, während es gegen Heißgaskorrosion empfindlich ist. Der Heißgaskorrosionsschutz wird durch die Cordierit-Schicht 16 erreicht. Diese wird durch Plasmaspritzen aufgebracht, um die Poren 18 zu bilden. Cordierit weit eine sehr gute Stabilität gegenüber korrosiven Atmosphären auf.

Es ist beispielsweise auch möglich, eine Cordierit-Schicht durch ein Schlickergußverfahren aufzubringen.

Es ist bekannt, daß bei der Silicierung des Grundkörpers 10 SiC-Stege sich von Rißufern ausgehend bilden. Nach der Ausbildung einer ersten SiC-Schicht wird die Reaktionsrate der Beschichtung von der Diffusion des Siliziums an die Grenzfläche Kohlenstoff-SiC gesteuert. Die Reaktionsrate ist von der Dicke der bereits gebildeten SiC-Schicht und der Zeit abhängig, wobei die Reaktionsrate im wesentlichen unabhängig ist von der Breite des Risses, der infiltriert wurde. Wenn die pyrolysebedingten Risse im C/C-Vorkörper an der späteren Grenzfläche zur SiC-Schicht 14 hin möglichst klein gehalten werden, dann läßt sich die Silizium-Abdampfung während der Beschichtung reduzieren oder sogar vermeiden. Es kann also der Si-Anteil an der Grenzfläche des Grundkörpers 10 zugunsten des SiC-Anteils verringert werden. Der mittlere Rißabstand und die mittlere Rißbreite läßt sich mit abnehmender Laminatdicke (der Abstand zwischen benachbarten Faserlagen im Grundkörper 10) reduzieren. Dies läßt sich bei der Herstellung dadurch erreichen, daß möglichst feine Gewebelagen zumindest in der grenzflächennahen Faserlage des Grundkörpers verwendet werden.

Es kann vorteilhaft sein, für ein Substrat einen Gradientenaufbau vorzusehen. Dies wird untenstehend noch näher beschrieben.

Eine thermische Auslagerung des Bauteils führt zu einer günstigen Verteilung der Porengröße in der Cordierit-Schicht 16, welche die Behinderung der Rißausbreitung verstärkt. Durch einen thermischen Nachbehandlungsschritt des Bauteils unter inerter Atmosphäre kann die Empfindlichkeit der Korrosionsschutzschicht 16 gegenüber weiterer Rißbildung in dem Schichtsystem 14 und im Grundkörper 10 erhöht werden, indem durch die thermische Auslagerung gezielt die Dichte der Porengröße in der Cordierit-Schicht 16 beeinflußt wird.

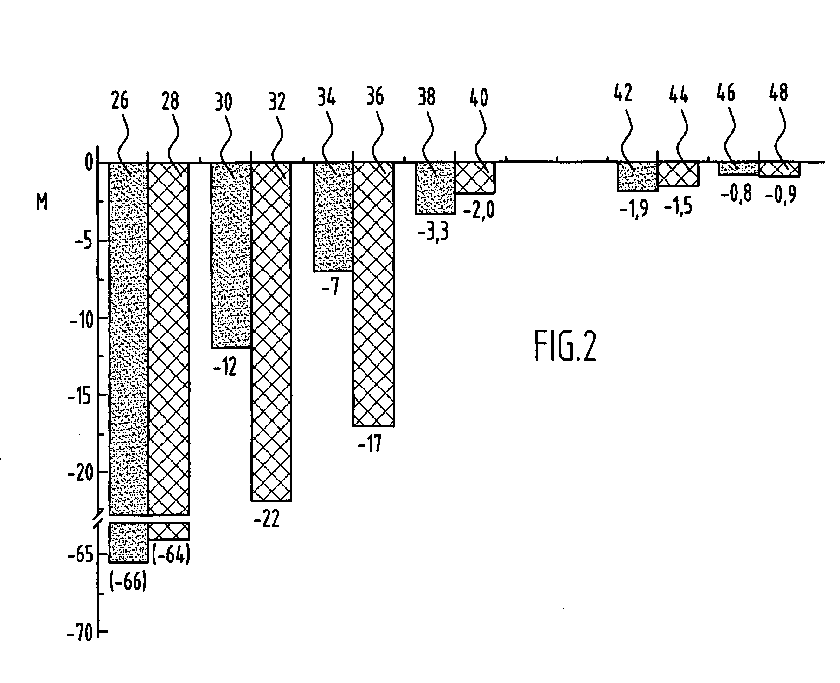

In Figur 2 ist das Oxidationsverhalten als Massenänderung M in Prozent bei isothermer Oxidation bei 1300°C und 25 Stunden und im Vergleich dazu bei thermischer Zyklierung zwischen 1000°C und 1300°C mit Gesamtdauer 50 Stunden (20 Zyklen mit einer Dauer von 2,5 Stunden) von unterschiedlich beschichteten C/C-SiC-Faserkeramiken mit Beschichtungen gezeigt.

Die Säule 26 zeigt ein unbeschichtetes Material bei isothermer Verfahrensführung, während die Säule 28 den gleichen unbeschichteten Grundkörper bei zyklischer Verfahrensführung zeigt.

Die Säule 30 zeigt die Massenänderung eines Grundkörpers, welcher mit einer äußeren Cordierit-Schicht versehen wurde bei isothermer Verfahrensführung; der Vergleichsfall bei zyklischer Verfahrensführung ist durch die Säule 32 gezeigt. Man erkennt beim Vergleich der Säulen 26 und 30 bzw. 28 und 32, daß durch die Cordierit-Schicht das Oxidationsverhalten verbessert wird. Die Cordierit-Schicht wirkt also auch als Oxidationsschutzschicht neben ihrer Eigenschaft als Korrosionsschutzschicht.

Die Säule 34 zeigt bei isothermer Verfahrensführung die Massenänderung eines mit SiC-beschichteten Grundkörpers; zum Vergleich hierzu zeigt die Säule 36 den gleichen beschichteten Grundkörper bei zyklischer Verfahrensführung. Man erkennt hier, daß eine SiC-Schicht Oxidationsschutzwirkung hat.

Die Säule 38 zeigt bei isothermer Verfahrensführung einen Grundkörper, welcher mit SiC beschichtet ist und eine darüberliegenden Cordierit-Beschichtung aufweist. Die Säule 40 zeigt im Vergleich dazu den gleichen beschichteten Grundkörper bei zyklischer Verfahrensführung. Man erkennt, daß hier ein stark verbesserter Oxidationsschutz bewirkt wird, wobei dieser auf die Kombination von SiC-Beschichtung und Cordierit-Beschichtung zurückzuführen ist. Auch hier wiederum hat die Cordierit-Schicht neben ihrer Korrosionsschutzwirkung eine Oxidationsschutzwirkung.

Die Säule 42 zeigt das Oxidationsverhalten für einen Grundkörper, welcher mit einem BORASiC-Schichtsystem versehen ist bei isothermer Verfahrensführung; im Vergleich dazu zeigt die Säule 44 den gleichen beschichteten Grundkörper bei zyklischer Verfahrensführung. Man erkennt, daß die BORASiC-Schicht einen guten Oxidationsschutz liefert. Jedoch ist, wie oben erwähnt, der Korrosionsschutz nicht ausreichend, da sowohl SiC als auch B₂O₃ in der BORASiC-Schicht unter korrosiven Bedingungen angegriffen werden. Wasserdampf führt zur Oxidation des SiC, welche im Vergleich zur Sauerstoffoxidation um den Faktor 10 bis 20 beschleunigt ist. Verunreinigungen wie H₂S oder Kohlenwasserstoffe wie Methan oder Kohlenmonoxid, wie sie beispielsweise in Rauchgas enthalten sind, führen zu starken Degradationen, die bei reduzierten O₂-Partialdrücken zur Oxidation von SiC zu gasförmigem SiO führen. B₂O₃ ist hydrolyseempfindlich, so daß es in Wasser aufgelöst wird. Bei hochkorrosiven Atmosphären wie Rauchgasatmosphären ist die Schutzwirkung von BORASiC nicht mehr ausreichend. Erfindungsgemäß ist deshalb die Cordierit-Schicht 16 vorgesehen.

Durch die Säulen 46 und 48 ist das Oxidationsverhalten für einen Grundkörper gezeigt, welcher den Schichtenaufbau gemäß Figur 1 aufweist, d. h. auf einer C/C-SiC-Faserkeramik ist ein BORASiC-Schichtsystem angeordnet, auf welchem wiederum die Cordierit-Schicht 16 sitzt. Man erkennt, daß durch diese erfindungsgemäße Beschichtung das Oxidationsverhalten optimiert ist, d. h. ein optimaler Oxidationsschutz gegeben ist. Darüber hinaus ist der Korrosionsschutz durch die äußere Cordierit-Schicht 16, welche die Oberfläche des Bauteiles bildet, gesichert.

Erfindungsgemäß ist eine äußere Cordierit-Schicht als Korrosionsschutzschicht vorgesehen.

Es ist dabei grundsätzlich auch möglich, daß diese Cordierit-Schicht direkt auf einen kohlenstoffhaltigen Grundkörper angeordnet ist, wobei dies nicht unter die Ansprüche fällt. Neben einem Korrosionsschutz erhält man dabei auch einen verbesserten Oxidationsschutz. Der Grundkörper kann beispielsweise ein Graphit-Grundkörper oder ein C/C-Grundkörper sein.

Der Grundkörper kann aber auch aus einem monolithischen Keramikmaterial und insbesondere nicht-oxidischen Keramikmaterial wie SiC oder Si₃N₄ bestehen, wobei eine Cordieritschicht direkt auf Si₃N₄ nicht unter die Ansprüche fällt.

Günstigerweise ist die Cordierit-Schicht auf einer Oxidationsschutzschicht oder einem Oxidationsschutzschichtsystem angeordnet, das selber mehrschichtig sein kann, wie beispielsweise ein BORASiC-Schichtsystem - oder einschichtig sein kann, wie beispielsweise eine SiC-Schicht, welche auf dem Grundkörper angeordnet ist.

Erfindungsgemäß ist es vorgesehen, daß eine Korrosionsschutzschicht aus Cordierit, auf einer Oxidationsschutzschicht oder auf dem Grundkörper angeordnet ist, wobei das Oxidmaterial der Korrosionsschutzschicht einen thermischen Ausdehnungskoeffizienten von höchstens 70 % des thermischen Ausdehnungskoeffizienten des darunter liegenden Materials, d. h. der darunter liegenden Oxidationsschutzschicht oder des Grundkörpers, aufweist.

Insbesondere sitzt dann unterhalb der Korrosionsschutzschicht eine Oxidationsschutzschicht aus SiC oder ein mehrschichtiges Oxidationsschutzsystem, wobei eine Oxidationsschutzschicht insbesondere Selbstheilungsfunktionen aufweist, d. h. in Kontakt mit Sauerstoff tritt eine oxidische Reaktion unter Volumenzunahme auf.

Das Oxidationsschutzsystem kann dabei einen mehrschichtigen Aufbau aufweisen mit einer sekundären Oxidationsschutzschicht und einer primären Oxidationsschutzschicht, wobei diese ihre Schutzwirkung in unterschiedlichen Temperaturbereichen (die sich überlappen können) entfalten.

Es kann aber auch vorgesehen sein, daß die Korrosionsschutzschicht direkt auf dem Grundkörper sitzt, insbesondere wenn es sich dabei um einen Graphit-Grundkörper oder einen monolithischen Keramik-Grundkörper handelt.

In Figur 3 ist ein Anwendungsbeispiel für ein erfindungsgemäßes Bauteil gezeigt:
Ein Bajonettwärmeträger 46 umfasst ein Innenrohr 48, welches in einem Außenrohr 50 angeordnet ist. In das Innenrohr 48 lässt sich über einen Anschluss 52 kalte Luft einkoppeln. Diese Luft durchströmt das Innenrohr 48 und gelangt über einen Ausgang 54 in das Außenrohr 50, welches das Innenrohr 48 umgibt.

An dem Außenrohr 50 strömt Rauchgas entlang und heizt die in dem Außenrohr 50 strömende Luft auf.

Die kalte Luft, welche in das Innenrohr 48 eingekoppelt wird, ist vorverdichtet unter einem Druck, der beispielsweise in der Größenordnung von 20 bar liegt. Das Innenrohr 48 ist üblicherweise aus einem Metall hergestellt.

Die erhitzte, vom Außenrohr 50 kommende Luft wird über einen Anschluss 56 einer Gasturbine zugeführt, um elektrischen Strom zu erzeugen.

Typische Temperaturen, die an dem Außenrohr 50 auftreten können, liegen zwischen 800°C und 1400°C. Das Außenrohr 50 muss dabei gasdicht sein, kriechbeständig und eine hohe Oxidations- und Korrosionsstabilität aufweisen.

Ein erfindungsgemäßes Bauteil kann bei entsprechender Formgebung als Außenrohr 50 verwendet werden, wobei die Cordierit-Schicht 16 insbesondere nach außen zum Rauchgas hin weist und damit der Rauchgasatmosphäre ausgesetzt ist.

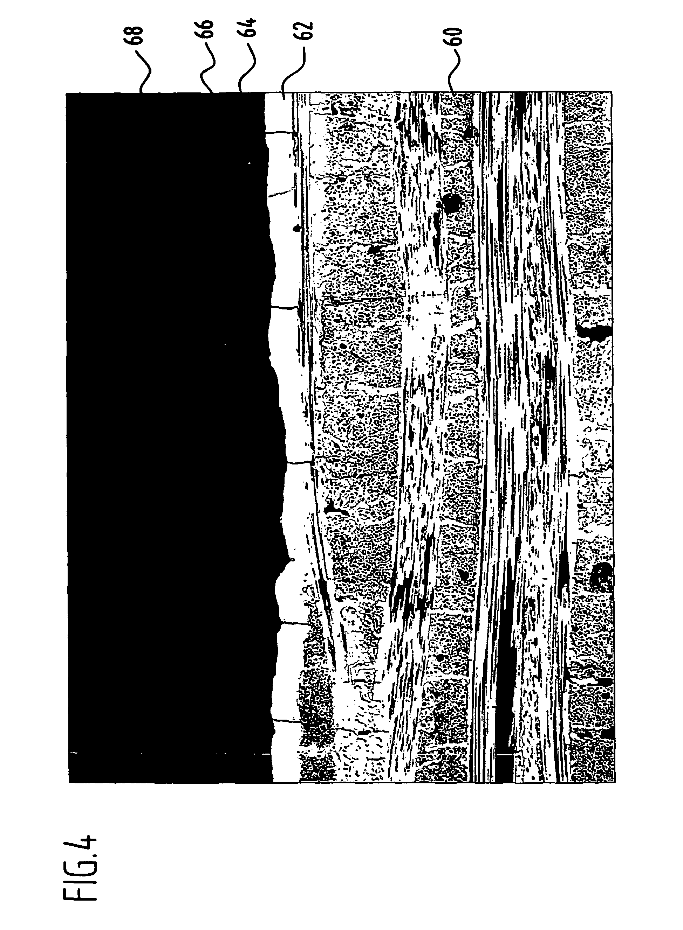

In Figur 4 ist ein Beispiel eines Bauteils in einer Querschliffotografie gezeigt, welches nicht unter die Ansprüche fällt. Auf einem Grundkörper 60 aus einem Faserverbundwerkstoff ist ein BORASiC-Schichtsystem 62 angeordnet. Auf dem BORASiC-Schichtsystem 62 wiederum ist als Korrosionsschutzschicht 64 eine Cordierit enthaltende Schicht angeordnet. Diese bildet eine äußere Oberfläche 66 des entsprechenden Bauteils (oberhalb der Cordierit-Schicht 64 ist ein Präparationsmaterial 68 für den Querschliff angeordnet).

Die Korrosionsschutzschicht 64 umfasst neben Cordierit noch Mullit. Mullit ist ein oxidisches Material, welches in bestimmtem Rahmen korrosionsbeständig ist. Über die Zumischung eines solchen korrosionsbeständigen Materials während der Herstellung der Korrosionsschutzschicht 64 lässt sich der thermische Ausdehnungskoeffizient der Korrosionsschutzschicht 64 einstellen und so an ein Substrat anpassen, welches die Korrosionsschutzschicht 64 trägt. Das Substrat ist in diesem Falle durch die Kombination des Grundkörpers 60 und des BORASiC-Schutzsystems 62 gebildet.

Bei dem in Figur 4 gezeigten Beispiel setzt sich die Korrosionsschutzschicht 64 zusammen aus einem 90 %-igen Cordierit-Anteil und einem 10 %-igen Mullit-Anteil. Die Verteilung des Mullits in der Korrosionsschutzschicht 64 ist homogen gleichmäßig.

Die Korrosionsschutzschicht 64 lässt sich herstellen, wenn bei der Aufbringung der entsprechenden Schicht mittels Plasmaspritzen entsprechende Pulvermaterialen (in diesem Beispiel Cordierit und Mullit) vor der Injektion in einen Plasmastrahl gemischt werden oder wenn ein Pulvervorrat mit einer Mischung von Cordierit und Mullit verwendet wird.

Ein weiteres mögliches Material zur Zumischung ist Spinell.

Über den Anteil des Zumischungsmaterials läßt sich, wie oben erwähnt, der thermische Ausdehnungskoeffizient der Korrosionsschutzschicht 64 einstellen.

Bei dem Ausführungsbeispiel gemäß Figur 4, bei dem die Korrosionsschutzschicht 64 zu 90 % Cordierit enthält und zu 10 % Mullit, ergab sich eine Rißdichte in der Korrosionsschutzschicht von 1,41/mm und in dem BORASiC-Schutzsystem eine Rißdichte von 3,61/mm.

Der Hauptbestandteil der Korrosionsschutzschicht 64 ist Cordierit, da Cordierit bei hoher Heißkorrosionsbeständigkeit zu dem erforderlichen niedrigen thermischen Ausdehnungskoeffizienten führt. Der Cordierit-Anteil in der Korrosionsschutzschicht 64 liegt höher als 50 % und vorzugsweise höher als 70 %.

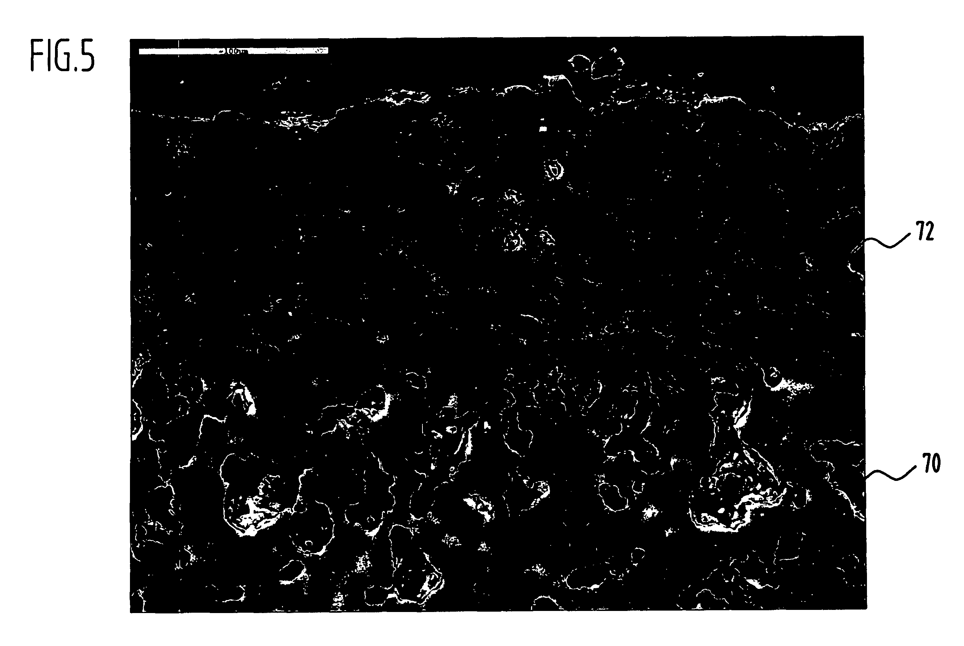

Bei einem weiteren Ausführungsbeispiel, von dem eine Querschliffotografie in Figur 5 gezeigt ist (im oberen linken Rand ist die Längenskala 100 µm erkennbar), ist auf einen Grundkörper 70 aus einem monolithischen Keramikmaterial direkt ohne Zwischenschicht eine Korrosionsschutzschicht 72 angeordnet. In dem gezeigten Beispiel ist der Grundkörper aus monolithischem SiC hergestellt und die Korrosionsschutzschicht 72 ist eine Cordierit-Schicht ohne Zumischung eines Additivs. Der Grundkörper 70 ist aus biomorphem SiC hergestellt.

Herstellungsverfahren von Strukturkeramiken und/oder Funktionskeramiken aus SiC-Keramik, bei welchen aus einem zellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silicium umfassenden Materialien in eine Silicium umfassende Carbidkeramik umgewandelt wird, wobei zur Herstellung des Vorkörpers als Ausgangsbestandteil mindestens zellulosehaltiges Pulver verwendet wird, ist in der nicht vorveröffentlichten deutschen Patentanmeldung Nr. 103 29 822.3 vom 30. Juni 2003 des gleichen Anmelders offenbart. Auf diese Anmeldung wird im Zusammenhang mit der Herstellung eines Grundkörpers aus biomorphem Keramikmaterial ausdrücklich Bezug genommen.

Ein weiteres Beispiel für einen Grundkörper aus einem Keramikmaterial und insbesondere monolithischen Keramikmaterial ist ein Grundkörper, welcher aus Si₃Ni₄ hergestellt ist.

Es kann grundsätzlich auch vorgesehen sein, daß die Cordierit-Schicht weitgehend porenfrei aufgebracht wird. Dadurch läßt sich der Diffusionskoeffizient für Sauerstoff durch die Korrosionsschutzschicht hindurch erniedrigen und dadurch eventuell eine aktive Oxidation verhindern oder zumindest reduzieren. Dies gilt unabhängig davon, auf welchem Substrat die Cordierit-Schicht angeordnet ist.

Ein porenfreies Aufbringen läßt sich erreichen, indem beispielsweise Plasmaspritzparameter entsprechend eingestellt werden.

Es kann auch vorgesehen sein, daß das Substrat (der Grundkörper oder der Grundkörper mit einer Zwischensicht oder einem Zwischenschichtsystem) einen Gradientenaufbau aufweist. Insbesondere weisen dann unterschiedliche Bereiche des Substrats unterschiedliche thermische Ausdehnungskoeffizienten bezogen auf die Abstandsrichtung zur Korrosionsschutzschicht auf. Dadurch läßt sich eine allmählich verbesserte Anpassung an den thermischen Ausdehnungskoeffizienten der Korrosionsschutzschicht erreichen. Dadurch wiederum wird die Haftung der Korrosionsschutzschicht verbessert.

## Patentansprüche

1. Hochtemperaturbeständiges Bauteil, in einem Temperaturbereich zwischen 800°C und 1400°C, aus einem kohlenstoffhaltigen Grundkörper und/oder einem Grundkörper aus einem keramischen Material (10; 70) mit einer Korrosionsschutzschicht (16; 72) aus einem Oxidmaterial, **dadurch gekennzeichnet , dass** der thermische Ausdehnungskoeffizient des Oxidmaterials höchstens 70 % des thermischen Ausdehnungskoeffizienten des Materials, welches unterhalb der Korrosionsschutzschicht (16; 72) angeordnet ist, beträgt, wobei die Korrosionsschutzschicht eine Cordierit-Schicht (16; 72) ist und das Material unterhalb der Cordierit-Schicht (16; 72) SiC ist.

2. Hochtemperaturbeständiges Bauteil nach Anspruch 1, **dadurch gekennzeichnet, dass** unterhalb der Korrosionsschutzschicht (16) zum Grundkörper (10) hin mindestens eine Oxidationsschutzschicht oder ein Oxidationsschutzschichtsystem (14) angeordnet ist.

3. Hochtemperaturbeständiges Bauteil nach Anspruch 2, **dadurch gekennzeichnet, dass** die mindestens eine Oxidationsschutzschicht Selbstheilungsfunktion hat, bei welcher Schichtmaterial bei Kontakt mit Sauerstoff zu einem Oxid unter Volumenzunahme reagiert.

4. Hochtemperaturbeständiges Bauteil nach einem der vorangehenden Ansprüche, **gekennzeichnet durch** eine sekundäre Oxidationsschutzschicht, welche unterhalb einer primären Oxidationsschutzschicht angeordnet ist.

5. Hochtemperaturbeständiges Bauteil nach Anspruch 4, **dadurch gekennzeichnet, dass** die sekundäre Oxidationsschutzschicht Bor enthält, welches bei Kontakt mit Sauerstoff zu einem Oxid mit Volumenzunahme reagiert.

6. Hochtemperaturbeständiges Bauteil nach einem der Ansprüche 2 bis 5, **dadurch gekennzeichnet, dass** eine Oxidationsschutzschicht eine Si-Verbindung enthält.

7. Hochtemperaturbeständiges Bauteil nach einem der vorangehenden Ansprüche, **dadurch gekennzeichnet, dass** die Korrosionsschutzschicht (16; 72) eine äußere Schicht ist.

8. Hochtemperaturbeständiges Bauteil nach einem der vorangehenden Ansprüche, **gekennzeichnet durch** mindestens eine SiC-Schicht.

9. Hochtemperaturbeständiges Bauteil nach einem der Ansprüche 2 bis 8, **gekennzeichnet durch** mindestens eine B₄C-Schicht.

10. Hochtemperaturbeständiges Bauteil nach einem der vorangehenden Ansprüche, **dadurch gekennzeichnet, dass** auf dem Grundkörper (10) ein SiC-B₄C-SiC-Schutzschichtsystem (14) angeordnet ist und auf diesem Schutzschichtsystem (14) eine Cordierit-Schicht (16) angeordnet ist.

11. Hochtemperaturbeständiges Bauteil nach einem der vorangehenden Ansprüche, **dadurch gekennzeichnet, dass** die Cordierit-Schicht (16; 72) Poren (18) aufweist.

12. Hochtemperaturbeständiges Bauteil nach Anspruch 11, **dadurch gekennzeichnet, dass** die Porengröße kleiner als 30 µm ist.

13. Hochtemperaturbeständiges Bauteil nach einem der vorangehenden Ansprüche, **dadurch gekennzeichnet, dass** die Dicke der Korrosionsschutzschicht (16; 72) mindestens 30 µm beträgt.

14. Hochtemperaturbeständiges Bauteil nach einem der vorangehenden Ansprüche, **dadurch gekennzeichnet, dass** der kohlenstoffhaltige Grundkörper ein Graphit-Grundkörper ist.

15. Hochtemperaturbeständiges Bauteil nach einem der Ansprüche 1 bis 13, **dadurch gekennzeichnet, dass** der kohlenstoffhaltige Grundkörper aus einem keramischen Verbundwerkstoff hergestellt ist.

16. Hochtemperaturbeständiges Bauteil nach Anspruch 15, **dadurch gekennzeichnet, dass** der Grundkörper (10) ein C/C-Grundkörper ist.

17. Hochtemperaturbeständiges Bauteil nach Anspruch 15 oder 16, **dadurch gekennzeichnet, dass** der Grundkörper (10) ein C/C-SiC-Grundkörper ist.

18. Hochtemperaturbeständiges Bauteil nach Anspruch 17, **dadurch gekennzeichnet, dass** der Grundkörper (10; 70) Refraktärmetalle enthält.

19. Hochtemperaturbeständiges Bauteil nach einem der Ansprüche 1 bis 13, **dadurch gekennzeichnet, dass** der keramische Grundkörper (70) aus einem monolithischen Keramikmaterial hergestellt ist.

20. Hochtemperaturbeständiges Bauteil nach einem der vorangehenden Ansprüche, **dadurch gekennzeichnet, dass** ein Substrat für die Korrosionsschutzschicht (16; 72) einen Gradientenaufbau zur Anpassung des thermischen Ausdehnungskoeffizienten aufweist.

21. Hochtemperaturbeständiges Bauteil nach Anspruch 20, **dadurch gekennzeichnet, dass** der Grundkörper einen Gradientenaufbau aufweist.

22. Hochtemperaturbeständiges Bauteil nach einem der Ansprüche 1, 7, 11 bis 13, **dadurch gekennzeichnet, dass** die Korrosionsschutzschicht (72) ohne Zwischenschicht auf dem Grundkörper (70) angeordnet ist, wobei der Grundkörper aus SiC hergestellt ist.

23. Hochtemperaturbeständiges Bauteil nach einem der Ansprüche 1 bis 13, **dadurch gekennzeichnet, dass** der Grundkörper (70) aus einem monolithischen Keramikmaterial hergestellt ist.

24. Hochtemperaturbeständiges Bauteil nach Anspruch 23, **dadurch gekennzeichnet, dass** der Grundkörper (70) aus SiC hergestellt ist.

25. Hochtemperaturbeständiges Bauteil nach Anspruch 23 oder 24, **dadurch gekennzeichnet, dass** der Grundkörper (70) aus biomorphem SiC hergestellt ist.

26. Verfahren zur Herstellung eines hochtemperaturbeständigen Bauteils, bei dem auf einen kohlenstoffhaltigen Grundkörper oder einen Grundkörper aus einem monolithischen Keramikmaterial als äußere Schicht eine Cordierit-Schicht auf SiC aufgebracht wird.

27. Verfahren nach Anspruch 26, **dadurch gekennzeichnet, dass** die Cordierit-Schicht so aufgebracht wird, dass sie Poren aufweist.

28. Verfahren nach einem der Ansprüche 26 oder 27, **dadurch gekennzeichnet, dass** die Cordierit-Schicht mittels Plasmaspritzen aufgebracht wird.

29. Verfahren nach einem der Ansprüche 26 bis 28, **dadurch gekennzeichnet, dass** die Cordierit-Schicht auf eine SiC-Schicht aufgebracht wird.

30. Verfahren nach einem der Ansprüche 26 bis 29, **dadurch gekennzeichnet, dass** die Cordierit-Schicht auf ein SiC-B₄C-SiC-System aufgebracht wird.

31. Verfahren nach einem der Ansprüche 26 bis 30, **dadurch gekennzeichnet, dass** der Grundkörper ein C/C-SiC-Grundkörper ist.

32. Verfahren nach Anspruch 31, **dadurch gekennzeichnet, dass** bei der Herstellung des Grundkörpers ein poröser C/C-Vorkörper mit einer binären Legierung auf Si-Basis infiltriert wird.

33. Verfahren nach Anspruch 32, **dadurch gekennzeichnet, dass** die binäre Legierung ein oder mehrere Refraktärmetalle umfasst.

34. Verfahren nach einem der Ansprüche 26 bis 33, **dadurch gekennzeichnet, dass** das Bauteil thermisch nachbehandelt wird.

35. Verwendung einer Cordierit-Schicht auf SiC als Korrosionsschutz für einen Grundkörper.

36. Verwendung nach Anspruch 35, **dadurch gekennzeichnet, dass** der Grundkörper aus einem monolithischen Keramikmaterial hergestellt ist.

37. Verwendung nach Anspruch 35, **dadurch gekennzeichnet, dass** der Grundkörper aus einem Faserverbundkeramikmaterial hergestellt ist.

38. Verwendung nach Anspruch 35, **dadurch gekennzeichnet, dass** der Grundkörper aus Graphit hergestellt ist.

## Claims

1. A high temperature resistant component, in a temperature range of between 800°C and 1400°C, consisting of a carbon-containing base body and/or a base body consisting of a ceramic material (10; 70) provided with a corrosion preventing layer (16; 72) consisting of an oxide material, **characterized in that** the thermal coefficient of expansion of the oxide material amounts to at most 70 % of the thermal coefficient of expansion of the material which is arranged below the corrosion preventing layer (16; 72), wherein the corrosion preventing layer is a cordierite layer (16; 72) and the material below the cordierite layer (16; 72) is SiC.

2. A high temperature resistant component in accordance with Claim 1, **characterized in that** at least one oxidation preventing layer or an oxidation preventing layer system (14) is arranged below the corrosion preventing layer (16) on the side thereof facing the base body (10).

3. A high temperature resistant component in accordance with Claim 2, **characterized in that** the at least one oxidation preventing layer has a self healing function, whereby layer material coming into contact with oxygen reacts to form an oxide whilst producing an increase in the volume.

4. A high temperature resistant component in accordance with any of the preceding Claims, **characterized by** a secondary oxidation preventing layer which is arranged below a primary oxidation preventing layer.

5. A high temperature resistant component in accordance with Claim 4, **characterized in that** the secondary oxidation preventing layer contains boron which reacts upon contact with oxygen to form an oxide together with an increase in volume.

6. A high temperature resistant component in accordance with any of the Claims 2 to 5, **characterized in that** an oxidation preventing layer contains a Si compound.

7. A high temperature resistant component in accordance with any of the preceding Claims, **characterized in that** the corrosion preventing layer (16; 72) is an outer layer.

8. A high temperature resistant component in accordance with any of the preceding Claims, **characterized by** at least one SiC layer.

9. A high temperature resistant component in accordance with any of the Claims 2 to 8, **characterized by** at least one B₄C layer.

10. A high temperature resistant component in accordance with any of the preceding Claims, **characterized in that** a SiC-B₄C-SiC protective layer system (14) is arranged on the base body (10) and a cordierite layer (16) is arranged on this protective layer system (14).

11. A high temperature resistant component in accordance with any of the preceding Claims, **characterized in that** the cordierite layer (16; 72) comprises pores (18).

12. A high temperature resistant component in accordance with Claim 11, **characterized in that** the size of the pores is less than 30 µm.

13. A high temperature resistant component in accordance with any of the preceding Claims, **characterized in that** the thickness of the corrosion preventing layer (16; 72) amounts to at least 30 µm.

14. A high temperature resistant component in accordance with any of the preceding Claims, **characterized in that** the carbon-containing base body is a graphite base body.

15. A high temperature resistant component in accordance with any of the Claims 1 to 13, **characterized in that** the carbon-containing base body is made of a ceramic composite material.

16. A high temperature resistant component in accordance with Claim 15, **characterized in that** the base body (10) is a C/C base body.

17. A high temperature resistant component in accordance with Claim 15 or 16, **characterized in that** the base body (10) is a C/C-SiC base body.

18. A high temperature resistant component in accordance with Claim 17, **characterized in that** the base body (10; 70) contains refractory metal.

19. A high temperature resistant component in accordance with any of the Claims 1 to 13, **characterized in that** the ceramic base body (70) is made of a monolithic ceramic material.

20. A high temperature resistant component in accordance with any of the preceding Claims, **characterized in that** a substrate for the corrosion preventing layer (16; 72) has a graded structure for purposes of matching the thermal coefficient of expansion.

21. A high temperature resistant component in accordance with Claim 20, **characterized in that** the base body has a graded structure.

22. A high temperature resistant component in accordance with any of the Claims 1, 7, 11 to 13, **characterized in that** the corrosion preventing layer (72) is arranged on the base body (70) without an intermediate layer and wherein the base body is made of SiC.

23. A high temperature resistant component in accordance with any of the Claims 1 to 13, **characterized in that** the base body (70) is made of a monolithic ceramic material.

24. A high temperature resistant component in accordance with Claim 23, **characterized in that** the base body (70) is made of SiC.

25. A high temperature resistant component in accordance with Claim 23 or 24, **characterized in that** the base body (70) is made of biomorphic SiC.

26. Method for the production of a high temperature resistant component wherein a cordierite layer on SiC is applied as an outer layer to a carbon-containing base body or a base body consisting of a monolithic ceramic material.

27. A method in accordance with Claim 26, **characterized in that** the cordierite layer is applied in such a way that it comprises pores.

28. A method in accordance with either of the Claims 26 or 27, **characterized in that** the cordierite layer is applied by means of a plasma spraying process.

29. A method in accordance with any of the Claims 26 to 28, **characterized in that** the cordierite layer is applied to a SiC layer.

30. A method in accordance with any of the Claims 26 to 29, **characterized in that** the cordierite layer is applied to a SiC-B₄C-SiC system.

31. A method in accordance with any of the Claims 26 to 30, **characterized in that** the base body is a C/C SiC base body.

32. A method in accordance with Claim 31, **characterized in that**, during the production of the base body, a porous C/C preform is infiltrated with a binary alloy having a Si basis.

33. A method in accordance with Claim 32, **characterized in that** the binary alloy comprises one or more refractory metals.

34. A method in accordance with any of the Claims 26 to 33, **characterized in that** the component is given a subsequent thermal treatment.

35. Use of a cordierite layer on SiC as a corrosion preventing means for a base body.

36. A use in accordance with Claim 35, **characterized in that** the base body is made of a monolithic ceramic material.

37. A use in accordance with Claim 35, **characterized in that** the base body is made of a composite fibre ceramic material.

38. A use in accordance with Claim 35, **characterized in that** the base body is made of graphite.

## Revendications

1. Composant à haute résistance thermique, dans une plage de température comprise entre 800°C et 1400°C, formé d'un corps de base contenant du carbone et/ou d'un corps de base en un matériau céramique (10 ; 70) avec une couche de protection contre la corrosion (16 ; 72) en un matériau à base d'oxyde, **caractérisé en ce que** le coefficient de dilatation thermique du matériau à base d'oxyde est au maximum de 70 % du coefficient de dilatation thermique du matériau qui est disposé sous la couche de protection contre la corrosion (16 ; 72), la couche de protection contre la corrosion étant une couche de cordiérite (16 ; 72) et le matériau sous la couche de cordiérite (16 ; 72) étant du SiC.

2. Composant à haute résistance thermique selon la revendication 1, **caractérisé en ce qu'**au moins une couche de protection contre l'oxydation ou un système de couches de protection contre l'oxydation (14) est disposée sous la couche de protection contre la corrosion (16) vers le corps de base (10).

3. Composant à haute résistance thermique selon la revendication 2, **caractérisé en ce que** l'au moins une couche de protection contre l'oxydation a une fonction auto-réparatrice, grâce à laquelle le matériau en couches réagit en cas de contact avec de l'oxygène pour former un oxyde avec augmentation de volume.

4. Composant à haute résistance thermique selon l'une quelconque des revendications précédentes, **caractérisé par** une couche de protection contre l'oxydation secondaire qui est disposée sous une couche de protection contre l'oxydation primaire.

5. Composant à haute résistance thermique selon la revendication 4, **caractérisé en ce que** la couche de protection contre l'oxydation secondaire contient du bore qui réagit en cas de contact avec de l'oxygène pour former un oxyde avec augmentation de volume.

6. Composant à haute résistance thermique selon l'une quelconque des revendications 2 à 5, **caractérisé en ce qu'**une couche de protection contre l'oxydation contient une liaison Si.

7. Composant à haute résistance thermique selon l'une quelconque des revendications précédentes, **caractérisé en ce que** la couche de protection contre la corrosion (16 ; 72) est une couche extérieure.

8. Composant à haute résistance thermique selon l'une quelconque des revendications précédentes, **caractérisé par** au moins une couche de SiC.

9. Composant à haute résistance thermique selon l'une quelconque des revendications 2 à 8, **caractérisé par** au moins une couche de B₄C.

10. Composant à haute résistance thermique selon l'une quelconque des revendications précédentes, **caractérisé en ce qu'**un système de couches de protection SiC-B₄C-SiC (14) est disposé sur le corps de base (10) et une couche de cordiérite (16) est disposée sur ce système de couches de protection (14).

11. Composant à haute résistance thermique selon l'une quelconque des revendications précédentes, **caractérisé en ce que** la couche de cordiérite (16 ; 72) présente des pores (18).

12. Composant à haute résistance thermique selon la revendication 11, **caractérisé en ce que** la taille des pores est inférieure à 30 µm.

13. Composant à haute résistance thermique selon l'une quelconque des revendications précédentes, **caractérisé en ce que** l'épaisseur de la couche de protection contre la corrosion (16 ; 72) est d'au moins 30 µm.

14. Composant à haute résistance thermique selon l'une quelconque des revendications précédentes, **caractérisé en ce que** le corps de base contenant du carbone est un corps de base en graphite.

15. Composant à haute résistance thermique selon l'une quelconque des revendications 1 à 13, **caractérisé en ce que** le corps de base contenant du carbone est fabriqué à partir d'un matériau composite céramique.

16. Composant à haute résistance thermique selon la revendication 15, **caractérisé en ce que** le corps de base (10) est un corps de base C/C.

17. Composant à haute résistance thermique selon la revendication 15 ou 16, **caractérisé en ce que** le corps de base (10) est un corps de base C/C-SiC.

18. Composant à haute résistance thermique selon la revendication 17, **caractérisé en ce que** le corps de base (10 ; 70) contient des métaux réfractaires.

19. Composant à haute résistance thermique selon l'une quelconque des revendications 1 à 13, **caractérisé en ce que** le corps de base céramique (70) est fabriqué à partir d'un matériau céramique monolithique.

20. Composant à haute résistance thermique selon l'une quelconque des revendications précédentes, **caractérisé en ce qu'**un substrat pour la couche de protection contre la corrosion (16 ; 72) présente une structure à gradient pour l'adaptation du coefficient de dilatation thermique.

21. Composant à haute résistance thermique selon la revendication 20, **caractérisé en ce que** le corps de base présente un corps à gradient.

22. Composant à haute résistance thermique selon l'une quelconque des revendications 1, 7, 11 à 13, **caractérisé en ce que** la couche de protection contre la corrosion (72) est disposée sur le corps de base (70) sans couche intermédiaire, le corps de base étant fabriqué en SiC.

23. Composant à haute résistance thermique selon l'une quelconque des revendications 1 à 13, **caractérisé en ce que** le corps de base (70) est fabriqué en un matériau céramique monolithique.

24. Composant à haute résistance thermique selon la revendication 23, **caractérisé en ce que** le corps de base (70) est fabriqué en SiC.

25. Composant à haute résistance thermique selon la revendication 23 ou 24, **caractérisé en ce que** le corps de base (70) est fabriqué en SiC biomorphe.

26. Procédé de fabrication d'un composant à haute résistance thermique dans lequel une couche de cordiérite sur SiC est appliquée sous forme de couche extérieure sur un corps de base contenant du carbone ou un corps de base en un matériau céramique monolithique.

27. Procédé selon la revendication 26, **caractérisé en ce que** la couche de cordiérite est appliquée de telle sorte qu'elle présente des pores.

28. Procédé selon l'une quelconque des revendications 26 ou 27, **caractérisé en ce que** la couche de cordiérite est appliquée par projection au plasma.

29. Procédé selon l'une quelconque des revendications 26 à 28, **caractérisé en ce que** la couche de cordiérite est appliquée sur une couche de SiC.

30. Procédé selon l'une quelconque des revendications 26 à 29, **caractérisé en ce que** la couche de cordiérite est appliquée sur un système SiC-B₄C-SiC.

31. Procédé selon l'une quelconque des revendications 26 à 30, **caractérisé en ce que** le corps de base est un corps de base C/C-SiC.

32. Procédé selon la revendication 31, **caractérisé en ce que** lors de la fabrication du corps de base, une ébauche C/C poreuse est infiltrée avec un alliage binaire sur base Si.

33. Procédé selon la revendication 32, **caractérisé en ce que** l'alliage binaire comprend un ou plusieurs métaux réfractaires.

34. Procédé selon l'une quelconque des revendications 26 à 33, **caractérisé en ce que** le composant est soumis à un traitement thermique ultérieur.

35. Application d'une couche de cordiérite sur SiC comme couche de protection contre la corrosion pour un corps de base.

36. Application selon la revendication 35, **caractérisée en ce que** le corps de base est fabriqué en un matériau céramique monolithique.

37. Application selon la revendication 35, **caractérisée en ce que** le corps de base est fabriqué en un matériau céramique renforcé par fibres.

38. Application selon la revendication 35, **caractérisée en ce que** le corps de base est fabriqué en graphite.
